Europäisches Patentamt

European Patent Office

Office européen des brevets

Publication number: **0 384 466**
**A1**

# EUROPEAN PATENT APPLICATION

Application number: 90103463.7

Int. Cl.⁵ **B26B 29/06, A47J 47/00**

Date of filing: 22.02.90

Priority: 24.02.89 IT 5289489 U

Date of publication of application:
**29.08.90 Bulletin 90/35**

Designated Contracting States:
**DE ES FR GB IT**

Applicant: **Gl. & Gl. S.r.l.**
**Via Giacomo Dina, 83/6**
**I-10135 Torino(IT)**

Inventor: **Macario, Giuseppe**
**Via Maria Cordero, 1/A**
**I-10095 Grugliasco(IT)**
Inventor: **Patti, Giuseppe**
**Via Bardonecchia, 2**
**I-10042 Nichelino(IT)**

Representative: **Boggio, Luigi et al**
**STUDIO TORTA Società Semplice Via Viotti,**
**9**
**I-10121 Torino(IT)**

Kitchen utensil, particularly for slicing sausage or similar.

A utensil (1) substantially comprising:
first means (2) for guiding displacement of a sausage (3) in a predertermined direction, e.g. in the direction of the longitudinal axis of the sausage (3); means (4, 5) for controlling displacement of the sausage (3) in relation to the first guide means (2);
and
second guide means (11, 12) located at at least one end of the first guide means (2) and defining at least one cutting plane; which second guide means (11, 12) are designed, in use, to guide a cutting blade (13).

Fig.1

EP 0 384 466 A1

## KITCHEN UTENSIL, PARTICULARLY FOR SLICING SAUSAGE OR SIMILAR

The present invention relates to a kitchen utensil, particularly for slicing sausage or similar.

In the following description and claims, the term "sausage or similar" applies to both sausages and any type of foodstuff of substantially elongated, preferably cylindrical, shape, which is sliced transversely prior to serving.

Most types of sausage are usually served already sliced, though some, such as raw salame and cotechino (spiced Italian sausage), are preferably served whole and sliced at the table. In both cases, however, slicing is indispensable, and is generally performed using an ordinary kitchen knife together with a fork for holding the sausage steady.

The sausage is usually sliced either perpendicularly or obliquely in relation to its longitudinal axis and, particularly when sliced at the table, is difficult to hold steady using an ordinary kitchen fork on account of its substantially cylindrical shape and the flat plate it is usually sliced on.

The aim of the present invention is to provide a kitchen utensil for slicing sausage or similar, and designed to overcome the above drawback.

With this aim in view, according to the present invention, there is provided a kitchen utensil for slicing sausage or similar, characterised by the fact that it comprises:
first means for guiding displacement of a sausage in a predetermined direction, e.g. in the direction of the longitudinal axis of said sausage;
means for controlling displacement of said sausage in relation to said first guide means; and
second guide means located at at least one end of said first guide means and defining at least one plane in which to cut said sausage; said second guide means being designed, in use, to guide the blade by which said sausage is sliced.

A preferred, non-limiting embodiment of the present invention will be described by way of example with reference to the accompanying drawings, in which:

Fig.1 shows a view in perspective of a utensil in accordance with the present invention;

Fig.2 shows a top plan view of the Fig.1 utensil.

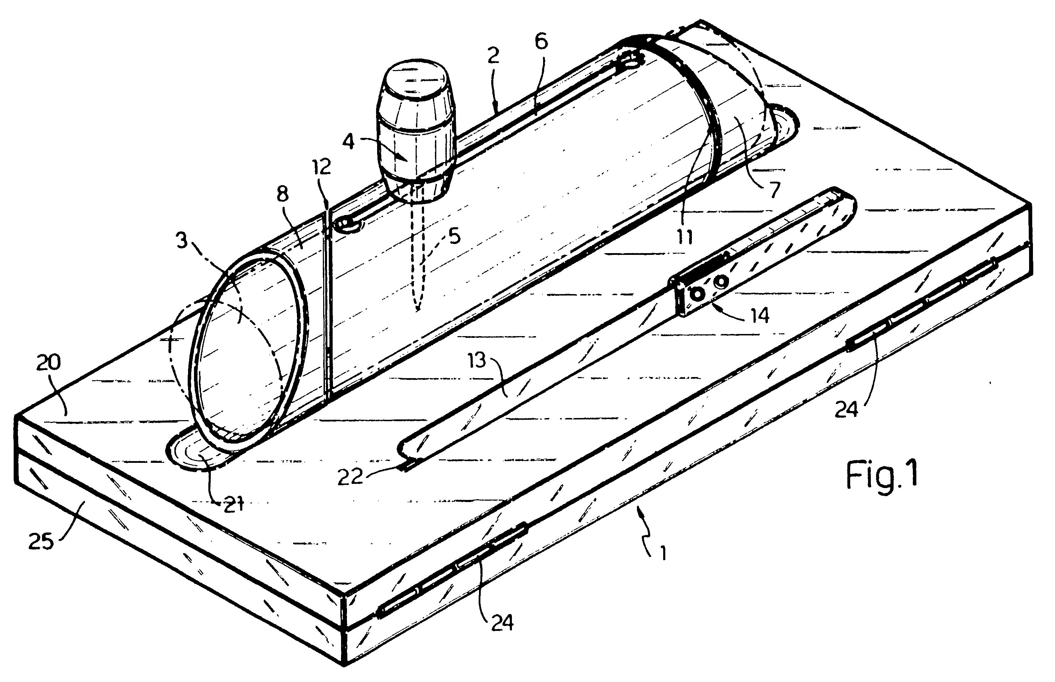

Number 1 in Fig.1 indicates a kitchen utensil, particularly for slicing sausage or similar.

According to the present invention, utensil 1 substantially comprises:
a central tubular body 2 for guiding displacement of a sausage 3 in a predetermined direction, e.g. in the direction of the longitudinal axis of sausage 3;
a knob 4 fitted with a skewer 5 designed to slide along a longitudinal slot 6 in tubular body 2, and to stick, in use, inside sausage 3 for controlling displacement of the same inside central tubular body 2; and
two tubular end bodies 7, 8 coaxial with and having the same diameter as central body 2.

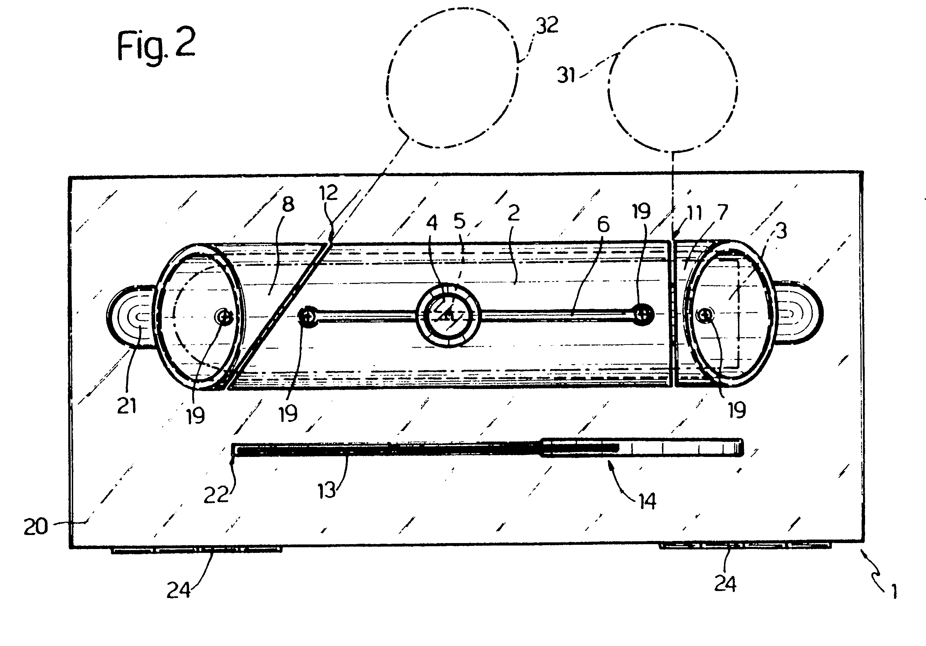

The inner end surfaces of end bodies 7 and 8 and the respective facing end surfaces of central body 2 define two slots 11 and 12 for receiving the blade 13 of a knife 14 and respectively guiding the same in two cutting planes. In particular (Fig.2), slots 11 and 12 lie in perpendicular and oblique planes respectively in relation to the axis of tubular bodies 2, 7 and 8. Tubular bodies 2, 7 and 8 are conveniently molded from preferably transparent plastic material, and are secured, by means of respective screws 19, to a supporting board 20 and housed inside a longitudinal cavity 21 formed inside the same. Said board 20 also presents a slot 22 housing blade 13 of knife 14, and is connected by a hinge 24 to a further board 25 which, if needed, may be swung out to act as an additional work top or extension of board 20.

Fig.2 shows the same details as in Fig. 1, plus schematic plan views of two slices 31 and 32 of sausage 3 produced by slicing the same through slots 11 and 12 respectively.

Operation of utensil 1 is fairly straightforward and self-explanatory.

First of all, sausage 3 is inserted inside tubular bodies 2, 7 and 8.

Skewer 5 is then inserted inside sausage 3, and a portion of the latter positioned in the cutting plane defined by slot 11 or 12, depending on the type of slice 31 or 32 required.

At this point, the sausage is ready for slicing, which is done by removing blade 13 of knife 14 from slot 22 and inserting it inside slot 11 or 12. As each slice is cut, sausage 3 is moved forward using knob 4 and skewer 5.

The advantages of the utensil according to the present invention will be clear from the foregoing description. First of all, it provides for relatively troublefree slicing by virtue of sausage 3 being guided and held firmly at all times by tubular body 2.

Moreover, in addition to guiding the knife blade and so enabling uniform slices to be cut at the same angle, slots 11 and 12 also provide for safeguarding the user against accidents caused, for example, by slippage of the knife blade.

Finally, the versatility of utensil 1 is further enhanced by the possibility of employing bottom board 25 as an extension work top or cutting board.

To those skilled in the art it will be clear that changes may be made to utensil 1 as described and illustrated herein without, however, departing from the scope of the present invention.

For example, tubular bodies 2, 7 and 8 may be replaced by semitubular bodies defined by other than cylindrical outer surfaces.

Utensil 1 may consist solely of central body 2 having differently sloping end surfaces for guiding the knife blade.

According to a further solution, central body 2 may be replaced by a frame, e.g. of metal, having a pair of suitably oriented end rings in place of the end surfaces, and a rod having a slot connecting said two rings and supporting knob 4 and skewer 5.

According to yet a further solution, central body 2 may be produced by forming, e.g. hot forming, a sheet of plastic material, so as to obtain a C-shaped cross section incorporating the longitudinal guide slot.

Changes may be made to the design of skewer 5, which may present a number of tips or other means by which to engage and displace sausage 3.

Provision may also be made for a number of reference marks along slot 6, for indicating the thickness of the slice about to be cut.

## Claims

1) - A kitchen utensil for slicing sausage or similar, characterised by the fact that it comprises:
first means (2) for guiding displacement of a sausage (3) in a predetermined direction, e.g. in the direction of the longitudinal axis of said sausage (3);
means (4, 5) for controlling displacement of said sausage (3) in relation to said first guide means (2); and
second guide means located at at least one end of said first guide means (2) and defining at least one plane in which to cut said sausage (3); said second guide means being designed, in use, to guide the blade (13) by which said sausage (3) is sliced.

2) - A utensil as claimed in Claim 1, characterised by the fact that said first guide means (2) substantially comprise a main tubular body (2) designed to receive said sausage (3); said main tubular body (2) presenting a longitudinal slot (6) for guiding said means (4, 5) controlling displacement of said sausage (3).

3) - A utensil as claimed in Claim 2, characterised by the fact that said second guide means substantially consist of end surfaces of said main tubular body (2).

4) - A utensil as claimed in Claim 2 or 3, characterised by the fact that it comprises at least a further auxiliary tubular body (7, 8) located axially and adjacent to said main tubular body (2); the facing end surfaces of said main tubular body (2) and said auxiliary tubular body (7, 8) defining a respective slot (11, 12) constituting said second guide means.

5) - A utensil as claimed in Claim 4, characterised by the fact that it comprises two said auxiliary tubular bodies (7, 8) located axially and on opposite sides in relation to said main tubular body (2) and defining two respective slots (11, 12) defining different cutting planes.

6) - A utensil as claimed in any one of the foregoing Claims from 2 to 5, characterised by the fact that said control means (4, 5) substantially consist of a knob (4) from which extends at least a skewer (5) designed to slide along said slot (6) in said first guide means (2) and to engage and displace said sausage (3).

7) - A utensil as claimed in any one of the foregoing Claims, characterised by the fact that it comprises a main board (20) supporting said first and second guide means (2, 7, 8) and said control means (4, 5).

8) - A utensil as claimed in claim 7, characterised by the fact that said main board (20) comprises a slot (22) housing the blade (13) of a knife (14).

9) - A utensil as claimed in Claim 7 or 8, characterised by the fact that it comprises an auxiliary board (25) connected to said main board (20) via hinge means (24).

Fig.1

Fig. 2

EP 0 384 466 A1

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-775631 (CALDWELL) <br> * page 1, line 37 - page 3, line 31; figures 1-3 * | 1-3, 7 | B26B29/06 <br> A47J47/00 |
| Y | | 4, 6, 8, 9 | |
| Y | FR-A-2105353 (DUCOURNEAU) <br> * page 2, line 5 - page 3, line 8; figures * | 4, 6 | |
| Y | FR-A-2350082 (POPEIL BROTHERS INC) <br> * page 4, lines 6 - 35; figure 1 * | 8, 9 | |
| X | GB-A-254516 (SHORROCK) <br> * page 2, line 84 - page 3, line 29; figures * | 1, 7 | |
| Y | | 2, 3 | |
| Y | GB-A-266014 (SIMPSON) <br> * page 2, lines 51 - 94; figures 1, 2 * | 2, 3 | |
| A | GB-A-556260 (BUTTERFILL) <br> * the whole document * | 4, 5 | TECHNICAL FIELDS SEARCHED (Int. Cl.5) |
| A | GB-A-1087385 (LEVIN) <br> * the whole document * | 1, 3, 4 | B26B <br> B26D |
| A | GB-A-586931 (WALMSLEY) <br> * the whole document * | 1, 3, 4, 7 | A47J |
| A | FR-A-2603514 (LEGRAND) <br> * page 8, line 2 - page 9, line 15; figure 3 * | 1, 4, 5, 7 | |

The present search report has been drawn up for all claims

| Place of search | Date of completion of the search | Examiner |
|---|---|---|
| THE HAGUE | 31 MAY 1990 | BODART P. |